# EUROPÄISCHE PATENTSCHRIFT

(11) **EP 2 877 383 B1**
(45) Veröffentlichungstag und Bekanntmachung des Hinweises auf die Patenterteilung: **08.08.2018**
(21) Anmeldenummer: 13758768.9
(22) Anmeldetag: 23.08.2013
(51) Int. Cl.: B61L 27/00, G01M 17/08

(54) **DIAGNOSEVERFAHREN FÜR SCHIENENFAHRZEUGE**
DIAGNOSTIC METHOD FOR RAIL VEHICLES
PROCÉDÉ DE DIAGNOSTIC POUR VÉHICULES FERROVIAIRES

(30) Priorität: 18.09.2012 EP 12184836; 30.01.2013 DE 102013201494
(43) Veröffentlichungstag der Anmeldung: 03.06.2015
(73) Patentinhaber: Siemens Aktiengesellschaft, 80333 München (DE)
(72) Erfinder: FISCHER, Erhard, 90762 Fürth (DE); MÜLLER, Thomas, 90552 Röthenbach/Pegnitz (DE); POPP, Frank, 90766 Fürth (DE); PUNSTEIN, Dirk, 90425 Nürnberg (DE); SCHULZE, Christian, 90419 Nürnberg (DE); TÖNSING, Ekkehard, 91353 Hausen (DE)
(86) Internationale Anmeldenummer: PCT/EP2013/067505
(87) Internationale Veröffentlichungsnummer: WO 2014/044484

(56) Entgegenhaltungen:
- GB-A- 2 450 698
- US-A- 5 445 347

## Beschreibung

Die Erfindung betrifft ein Verfahren und ein System zur Diagnose eines Betriebszustands eines oder mehrerer Schienenfahrzeuge, welche jeweils zumindest eine Messeinrichtung zur Erfassung von Messwerten zumindest einer Messgröße umfassen, wobei der Betriebszustand durch zumindest eine Messgröße charakterisiert wird.

Es sind Schienenfahrzeuge bekannt geworden, welche Messeinrichtungen an unterschiedlichen Fahrzeugkomponenten aufweisen, um Messwerte einer Messgröße zu erfassen. So sind beispielsweise an den Fahrmotoren des Schienenfahrzeugs Temperaturfühler angeordnet, um Messwerte der Temperatur der Fahrmotoren aufzunehmen. Anschließend werden die Messwerte an Bord des Schienenfahrzeugs ausgewertet, indem sie beispielsweise jeweils mit einem vorher festgelegten Schwellwert verglichen werden. Übersteigt ein Messwert einer Fahrzeugkomponente den Schwellwert, so wird eine Fehlfunktion der Fahrzeugkomponente angezeigt. Das Ergebnis der Auswertung der Messwerte kann auch an ein landseitig angeordnetes Kontrollzentrum übermittelt und dort ausgegeben werden. Das Dokument US 5 445 347 offenbart ein Verfahren mit den Merkmalen des Oberbegriffs des Anspruch 1.

Der Erfindung liegt die Aufgabe zugrunde, ein Verfahren und ein System vorzuschlagen, um präzise Vorhersagen zur Instandhaltung zu treffen.

Gelöst wird die Aufgabe durch die Gegenstände der unabhängigen Patentansprüche 1 und 8 Weiterbildungen und Ausgestaltungen der Erfindung finden sich in den Merkmalen der abhängigen Patentansprüche wieder.

Ein erfindungsgemäßes Verfahren zur Diagnose eines oder mehrerer Schienenfahrzeuge, welche jeweils zumindest eine Messeinrichtung zur Erfassung von Messwerten zumindest einer

Messgröße umfassen, umfasst unter anderem folgende Verfahrensschritte:
- Erfassen von Messwerten mindestens einer Messgröße mittels zumindest einer Messeinrichtung eines Schienenfahrzeugs,
- Übertragen der Messwerte vom Schienenfahrzeug zu einem streckenseitig angeordneten Kontrollzentrum,
- Auswerten der Messwerte im Kontrollzentrum mittels eines vorgegebenen Algorithmus,
- Bereitstellen zumindest eines Ergebnisses der Auswertung zur Ausgabe vom Kontrollzentrum.

Zumindest ein Schienenfahrzeug, insbesondere zumindest ein Schienenfahrzeug des Personenverkehrs, umfasst zumindest eine Messeinrichtung, gelegentlich auch als Messaufnehmer bezeichnet. Diese ist insbesondere in oder am Schienenfahrzeug angeordnet und wird mit dem Schienenfahrzeug mitgeführt. Als nicht abschließende Auflistung von Messeinrichtungen seien hier aufgeführt: Tachometer, Potentiometer, Feuchtesensor, Neigungssensor, Strom-/Spannungserfassung, Temperaturfühler und/oder Lagesensorik.

Die Übertragung der Messwerte vom Schienenfahrzeug zum Kontrollzentrum erfolgt beispielsweise drahtlos. Eine drahtlose Übertragung geschieht dabei zumindest abschnittsweise, d.h. die Übertragung muss nicht über den gesamten Weg vom Schienenfahrzeug zum Kontrollzentrum drahtlos sein. Eine drahtlose Übertragung findet beispielsweise per DFÜ-Verbindung, wie über ein GSM-, UMTS- oder LTE-Netz, zwischen Schienenfahrzeug und einer Sende- und Empfangsanlage dieses Netzes statt. Zwischen der Empfangsanlage und dem Kontrollzentrum kann die weitere Übertragung der Messwerte auch drahtgebunden erfolgen. Die Messwerte werden weitergebildet in einem vorgegebenen Zyklus vom Schienenfahrzeug zum Kontrollzentrum übertragen. Die Übertragung der Messwerte vom Schienenfahrzeug zum Kontrollzentrum erfolgt dabei insbesondere frei von vorgegebenen Zuständen oder Zustandsänderungen von Fahrzeugkomponenten des Schienenfahrzeugs. Das Kontrollzentrum ist strecken- und damit landseitig und insbesondere ortsfest und entfernt vom Schienenfahrzeug angeordnet.

Dort findet die Auswertung der Messwerte mittels eines vorgegebenen Algorithmus statt. Dafür weist das Kontrollzentrum insbesondere einen Controller auf, welcher geeignet ist zur Auswertung der Messwerte mittels des vorgegebenen Algorithmus. Der Algorithmus liegt vorteilhaft als Software vor. Dies birgt den Vorteil einer einfachen und schnellen Anpassung des Algorithmus. Algorithmus und Messwerte können in einem Speicher gehalten werden, wie auch Zwischenergebnisse der Auswertung. Die Auswertung führt zu zumindest einem Ergebnis. Dieses zumindest eine Ergebnis wird vom Kontrollzentrum bereitgestellt.

Es wird auf das Schienenfahrzeug übertragen und dort in vorgegebener Form ausgegeben, beispielsweise visualisiert, und/oder das Ergebnis der Auswertung wird streckenseitig, insbesondere im Kontrollzentrum in vorgegebener Form ausgegeben, beispielsweise visualisiert. Alternativ ist auch eine Ausgabe beim Kunden möglich. Das Ergebnis der Auswertung kann auch über das Internet zur Verfügung gestellt werden, um von unterschiedlichen Stellen darauf zurückzugreifen. Eine Visualisierung erfolgt beispielsweise als Darstellung auf einem Bildschirm. Neben Visualisierungen kommen auch die akustische Ausgabe, eine taktile Rückmeldung oder SMS als weitere Ausgabeformen in Betracht. Das Ergebnis einer Auswertung der Messwerte mittels des vorgegebenen Algorithmus kann als solches mehrere entsprechende Formen annehmen. Es kann ein einfaches Stop-Signal sein, welches als akustischer Alarm dem Fahrzeugführer des Schienenfahrzeugs ausgegeben wird. Andererseits kann es sich um eine Diagnose oder Ausfall-Prognose für zumindest eine Fahrzeugkomponente des Schienenfahrzeugs handeln, welche einer Wartungsmannschaft zur Erstellung eines Wartungsplans für das Schienenfahrzeug ausgegeben wird. Als weiteres Beispiel sei hier eine Lebensdauerprognose genannt. Das Verfahren ist geeignet für eine vorausschauende Instandhaltung, englisch predictive maitenance, und damit geeignet,

Vorhersagen über die Wahrscheinlichkeit eines technischen Ausfalls einer Fahrzeugkomponente zu treffen und/oder um diesem vorzubeugen, entsprechende Wartungsintervalle zu planen.

Zur Übertragung des Ergebnisses vom Kontrollzentrum zum Schienenfahrzeug weisen Kontrollzentrum und Schienenfahrzeug zueinander komplementäre Sende- und Empfangsanlagen auf. Die Ergebnisse werden dann vom streckenseitig angeordneten Kontrollzentrum zum Schienenfahrzeug insbesondere streckenweise drahtlos übertragen.

Das Bereitstellen des Ergebnisses durch das Kontrollzentrum hat neben der Möglichkeit des örtlich unbeschränkten Zugriffs auf das Ergebnis den weiteren Vorteil eines zeitlich unbeschränkten Zugriffs. So werden gemäß einer weiteren Ausführungsform mehrere Ergebnisse unterschiedlicher Zeitpunkte für einen vorgegebenen Zeitraum im Kontrollzentrum gespeichert und zur Ausgabe bereitgestellt. Der Speicher muss einerseits damit nicht im Schienenfahrzeug mitgeführt werden. Andererseits kann die Ausgabe eines oder mehrerer Ergebnisse auch in Abhängigkeit von Ereignissen, wie auch in Abhängigkeit vom Ergebnis der Auswertung selbst, oder in Abhängigkeit von Zuständen oder Zustandsänderungen des Schienenfahrzeugs oder von zumindest einer oder mehreren Fahrzeugkomponenten des Schienenfahrzeugs erfolgen. Dies wird aus als Eventgesteuert bezeichnet.

Verfolgt beispielsweise die Auswertung das Ziel einer Feststellung der augenblicklichen, sicheren Fahrtüchtigkeit des Schienenfahrzeugs, kann das Ergebnis der Auswertung "positiv" oder "negativ" lauten. Das Ergebnis selbst wird vom Kontrollzentrum bereitgestellt, selbst, wenn es "positiv" ist. Übertragen und/oder Ausgegeben wird das Ergebnis "positiv" aber nicht; nur ein Ergebnis "negativ" wird übertragen und/oder ausgegeben, beispielsweise als "Stop-Signal" für den Fahrzeugführer. Die Ausgabe zumindest eines Ergebnisses und/oder die Übertragung zumindest eines Ergebnisses vom Kontrollzentrum zum Schienenfahrzeug kann daher vom Ausgang der Auswertung abhängen. Die Übertragung der Messwerte vom Schienenfahrzeug zum Kontrollzentrum dagegen erfolgt frei von vorgegebenen Zuständen oder Zustandsänderungen von Fahrzeugkomponenten des Schienenfahrzeugs. Es handelt sich dabei also nicht um eine Eventgesteuerte Übertragung, sondern sie wird zyklisch durchgeführt.

Ein weiterer Vorteil des erfindungsgemäßen Verfahrens ist darin begründet, dass weitere Messwerte mittels des vorgegebenen Algorithmus ausgewertet werden, welche mittels vom Schienenfahrzeug freien Messeinrichtungen erfasst werden. Diese vom Schienenfahrzeug freien Messeinrichtungen sind unabhängig vom Schienenfahrzeug. Die weiteren Messwerte werden durch diese Messeinrichtungen daher unabhängig von Zuständen oder Zustandsänderungen vom Schienenfahrzeug oder von Fahrzeugkomponenten des Schienenfahrzeugs erfasst. Diese weiteren Messwerte sind Messwerte zu der mindestens einen Messgröße, zu welcher auch die Messwerte des Schienenfahrzeugs erfasst werden, und/oder die weiteren Messwerte sind Messwerte zu weiteren Messgrößen. Vom Schienenfahrzeug freie Messeinrichtungen werden nicht mit dem Schienenfahrzeug mitgeführt. Es muss sich jedoch nicht zwingend um eine stationäre Messeinrichtung handeln, beispielsweise ist sie auf einem weiteren Fahrzeug, insbesondere Schienenfahrzeug, beispielsweise auch baugleichen Schienenfahrzeug, angeordnet. Insbesondere handelt es sich bei der oder den Messeinrichtungen jedoch um streckenseitig angeordnete, unbewegliche Messeinrichtungen. Durch die Auswertung mittels desselben Algorithmus fließen die weiteren Messwerte der vom Schienenfahrzeug freien, unabhängigen Messeinrichtungen in das Ergebnis der Auswertung der Messwerte der Messeinrichtungen des Schienenfahrzeugs mit ein.

Die weiteren Messwerte der vom Schienenfahrzeug freien, unabhängigen Messeinrichtungen sind dabei insbesondere unabhängig von den Messwerten, welche von den Messeinrichtungen des Schienenfahrzeugs erfasst werden. Der umgekehrte Fall gilt nicht notwendigerweise. So erfasst beispielsweise ein Temperaturfühler als Messeinrichtung des Schienenfahrzeugs Messwerte der Messgröße Temperatur einer Fahrzeugkomponente des Schienenfahrzeugs, z.B. eines Fahrmotors. Vom Schienenfahrzeug freie und unabhängige Temperaturfühler, beispielsweise entlang der Strecke des Schienenfahrzeugs positioniert, erfassen ihrerseits die Temperatur der Luft in der Umgebung des vorbeifahrenden Schienenfahrzeugs. So steigt die Temperatur des Fahrmotors an, beeinflusst von der ansteigenden Temperatur der Luft der Umgebung. Eine ansteigende Temperatur des Fahrmotors beeinflusst hingegen die Temperatur der Luft der Umgebung nur unwesentlich und ist daher zu vernachlässigen - die Temperatur der Luft der Umgebung gilt in diesem Anschauungsbeispiel als unabhängig von der Temperatur des Fahrmotors des Schienenfahrzeugs.

Die weiteren Messwerte, welche von Messeinrichtungen erfasst werden, welche unabhängig vom Schienenfahrzeug sind, werden beispielsweise von einer zentralen Stelle, wie dem Wetterdienst, erfasst und beziehen sich auf die unmittelbare oder die mittelbare Umgebung des Schienenfahrzeugs. Die unmittelbare Umgebung des Schienenfahrzeugs schließt dabei beispielsweise die Umwelt oder die Infrastruktur, beispielsweise die Streckenbeschaffenheit, des Schienenfahrzeugs mit ein. Auch eine Berücksichtigung von fahrzeugfreien und fahrzeuggebundenen, jedoch frei von den identisch ausgestalteten Fahrzeugkomponenten erfassten, Messwerten ist möglich. Insbesondere durch die Auswertung im Kontrollzentrum ermöglicht dieses Verfahren somit ein Berücksichtigen von Messwerten, die nicht fahrzeuggebunden sind. Erfindungsgemäß werden die Messwerte, welche mittels der zumindest eine Messeinrichtung von dem zumindest eine Schienenfahrzeug erfasst werden, im Kontrollzentrum mittels des vorgegebenen Algorithmus ausgewertet, unter Berücksichtigung von den weiteren Messwerten, welche mittels Messeinrichtungen erfasst werden, welche unabhängig vom Schienenfahrzeug sind.

Die weiteren Messwerte, welche mittels Messeinrichtungen erfasst werden, welche unabhängig vom Schienenfahrzeug sind, können, zusätzlich zu den Messwerten, welche mittels der zumindest einen Messeinrichtung von dem zumindest eine Schienenfahrzeug erfasst werden, ebenfalls zum Kontrollzentrum übermittelt werden und in die Auswertung mit einfließen. Die Auswertung der weiteren Messwerte kann also zu Prognosen für Temperaturwerte führen, welche bei der Auswertung der Messwerte vom Schienenfahrzeug berücksichtigt werden. Eine Auswertung der Messwerte vom Schienenfahrzeug im Kontrollzentrum mittels des vorgegebenen Algorithmus erfolgt also unmittelbarer Abhängigkeit von den weiteren Messwerten, welche unabhängig vom Schienenfahrzeug erfasst werden.

Zur Auswertung können viele verschiedene Algorithmen Verwendung finden. So kann gemäß einem Ausführungsbeispiel der Erfindung der vorgegebene Algorithmus geeignet sein zur Trendanalyse einer Messreihe von Messwerten einer vorgegebenen Messgröße. Ändert sich die Temperatur mit der Zeit kann hiermit vorausgesagt werden, wann eine vorgegebene Grenztemperatur voraussichtlich überschritten werden wird. Weitere Algorithmen sind in der nachfolgenden, offenen, nicht abschließenden Auflistung enthalten: Frequenzanalyse und weitere Standardmodelle der statistischen Analyse.

Gemäß einer weiteren Weiterbildung des erfindungsgemäßen Verfahrens umfasst das zumindest eine Schienenfahrzeug zumindest eine Gruppe identisch ausgestalteter Fahrzeugkomponenten, wobei
- Messwerte zu zumindest einer vorgegebenen Messgröße für jede der identisch ausgestalteten Fahrzeugkomponenten mittels zumindest einer Messeinrichtung eines Schienenfahrzeugs erfasst werden,
- die erfassten Messwerte vom Schienenfahrzeug zu einem streckenseitig angeordneten Kontrollzentrum übertragen werden,
- die erfassten Messwerte im Kontrollzentrum mittels eines vorgegebenen Algorithmus ausgewertet werden, und
- zumindest ein Ergebnis der Auswertung zur Ausgabe vom Kontrollzentrum bereitgestellt wird.

Als einfache Auswertung mittels des vorgegebenen Algorithmus werden die Messwerte von den identisch ausgestalteten Fahrzeugkomponenten im Kontrollzentrum miteinander verglichen. Anschließend kann auf einen fehlerhaften Zustand einer der identisch ausgestalteten Fahrzeugkomponenten geschlossen werden, wenn ein Messwert der Fahrzeugkomponente mindestens um ein vorgegebenes Maß von den anderen Messwerten der Anderen der identisch ausgestalteten Fahrzeugkomponenten abweicht.

Die Messwerte zu den identischen Fahrzeugkomponenten, welche miteinander verglichen werden, werden insbesondere zeitgleich erfasst.

Gemäß einer weiteren Weiterbildung wird ein Signal bei einer Abweichung eines Messwerts einer Fahrzeugkomponente von den anderen Messwerten der Anderen der identisch ausgestalteten Fahrzeugkomponenten um zumindest das vorgegebene erste Maß ausgegeben. Das Signal kann beispielsweise die Form eines akustischen Alarms oder einer visuellen Darstellung annehmen. Ein weiteres Signal generiert beispielsweise einen Termin innerhalb einer vorgegebenen Frist in einem Wartungsterminkalender des Schienenfahrzeugs.

Zum Vergleichen der Messwerte von den identisch ausgestalteten Fahrzeugkomponenten können im Kontrollzentrum beispielsweise folgende Verfahrensschritte ausgeführt werden:
- Speichern der vom Schienenfahrzeug zum Kontrollzentrum übertragenen Messwerte,
- Berechnen von Abständen der Messwerte zueinander,
- Vergleichen der Abstände mit dem vorgegebenen ersten Maß.

Auf einen fehlerhaften Zustand einer ersten Fahrzeugkomponente wird geschlossen, und gegebenenfalls ein Signal ausgegeben, wenn der Abstand eines Messwerts der ersten Fahrzeugkomponente zu einem Messwert einer weiteren, identisch ausgestalteten Fahrzeugkomponente ein vorgegebenes erstes Maß übersteigt.

Neben der einfachen Bestimmung der Abstände der einzelnen, zeitgleich erfassten Messwerte der identisch ausgestalteten Fahrzeugkomponenten zueinander, sind viele weitere Algorithmen denkbar, um eine Abweichung zumindest eines Messwerts von den anderen Messwerten zu erkennen. Bekannte Algorithmen hierfür sind beispielsweise die Bestimmung der einzelnen Residuen zu einer Modellfunktion erhalten durch die Methode der kleinsten Fehlerquadrate, die Bestimmung der einzelnen Abweichungen zum Erwartungswert und weitere Modelle der statistischen Analyse.

Des Weiteren können mehrere Maße vorgegeben werden, um bei Abweichung unterschiedliche Schlüsse zu ziehen und gegebenenfalls entsprechende Ergebnisse auszugeben. So kann bei einer Abweichung zumindest eines Messwerts um ein erstes Maß lediglich eine vorzunehmende Wartung angezeigt werden, bei einer Abweichung um ein zweites Maß hingegen kann ein nahender Ausfall der entsprechenden Fahrzeugkomponente angezeigt und vor diesem mit einem Signal gewarnt werden.

Gemäß einer weiteren Weiterbildung wird zumindest das erste Maß in Abhängigkeit von weiteren Messwerten zu der Messgröße und/oder zu einer oder mehrerer weiteren Messgrößen vorgegeben, welche weiteren Messwerte mittels Messeinrichtungen erfasst werden, welche unabhängig vom Schienenfahrzeug und damit auch unabhängig vom Betriebszustand des Schienenfahrzeugs sind. Die weiteren Messwerte sind dann selbstverständlich auch unabhängig von den Betriebszuständen der identisch ausgestalteten Fahrzeugkomponenten erfasst.

Weitere Messgrößen, zu welchen Messwerte vom Schienenfahrzeug und/oder unabhängig vom Schienenfahrzeug erfasst werden können, sind beispielsweise Geschwindigkeit, Drehzahl, Strom, Spannung, Temperatur, Druck und/oder Beschleunigung. Entsprechende Messeinrichtungen sind vergleichbar vorzusehen. Drehzahlen und/oder Temperaturen können beispielsweise von Motoren, Getrieben oder Rädern erfasst werden.

Messwerte zu zumindest einer vorgegebenen Messgröße werden beispielsweise von Fahrmotoren und/oder Getrieben des Schienenfahrzeugs erfasst. In einer Ausführungsform weist das Schienenfahrzeug zumindest zwei identisch ausgestaltete Fahrmotoren und/oder Getriebe auf, welche entsprechende Messeinrichtungen zur Aufnahme von den Messwerten aufweisen. In einem Ausführungsbeispiel weist ein Schienenfahrzeug zwei Temperaturfühler je Fahrmotor und/oder je Getriebe auf. Darüber hinaus kann es zumindest einen Temperaturfühler zur Erfassung der Umgebungstemperatur des Schienenfahrzeugs, welcher beispielsweise an der Außenhaut des Schienenfahrzeugs angeordnet ist, aufweisen.

Gemäß einem Veranschaulichungsbeispiel werden die Abstände zwischen den einzelnen Messwerten von den identisch ausgestalteten Fahrzeugkomponenten zu der Messgröße, welche den Betriebszustand des Schienenfahrzeugs charakterisiert, errechnet. Handelt es sich bei der Messgröße um die Temperatur und werden die entsprechenden Messwerte zu identisch ausgestalteten Fahrmotoren erfasst, welche jeweils an vergleichbaren Stellen am Schienenfahrzeug positioniert sind, so ist das vorgegebene erste Maß unabhängig von einer Umgebungstemperatur des Schienenfahrzeugs, da bei steigender Umgebungstemperatur alle Messwerte zu den identisch ausgestalteten Fahrmotoren ebenfalls nach oben verschoben werden. Sind jedoch die identisch ausgestalteten Fahrzeugkomponenten an stark unterschiedlichen Stellen im oder am Schienenfahrzeug verbaut, kann die Umgebungstemperatur einen Einfluss auf die Messwerte der Temperatur der einzelnen Fahrzeugkomponenten haben. Auch bei der Fernüberwachung einer Fahrzeugflotte kann eine Berücksichtigung der Umgebungstemperatur vorgesehen sein. So können die Messwerte der Temperatur von Fahrmotoren eines ersten Schienenfahrzeugs wesentlich angehoben sein, bei einer wesentlich höheren Umgebungstemperatur um das erste Schienenfahrzeug, im Vergleich zu einem zweiten Schienenfahrzeug, bei einer wesentlich geringeren Umgebungstemperatur um das zweite Schienenfahrzeug. Zusätzlich können auch Messwerte zu anderen Messgrößen berücksichtigt werden. So ist beispielsweise die Temperatur einer auf dem Dach des Schienenfahrzeugs verbauten Fahrzeugkomponente im Wesentlichen abhängig von der Sonneneinstrahlung, im Gegensatz zu einer unterflur angeordneten, ansonsten jedoch identisch ausgestalteten Fahrzeugkomponente. Für jeden Messwert zur vorgegebenen Messgröße von den identisch ausgestalteten Fahrzeugkomponenten kann, in Abhängigkeit von Messwerten zu einer oder mehrerer weiterer Messgrößen und/oder in Abhängigkeit von Messwerten zur selben Messgröße, welche unabhängig von den identisch ausgestalteten Fahrzeugkomponenten erfasst werden, ein erstes Maß vorgegebenen werden. Die ersten Maße können sich somit von Messwert zu Messwert zur vorgegebenen Messgröße von den identisch ausgestalteten Fahrzeugkomponenten und/oder von zugehöriger Fahrzeugkomponente zu Fahrzeugkomponente voneinander unterscheiden.

Weisen nun identisch ausgestaltete Fahrmotoren jeweils zwei Temperaturfühler auf, einen ersten Temperaturfühler an einer ersten Stelle eines jeden Fahrmotors und einen weiteren, zweiten Temperaturfühler an einer von der ersten Stelle verschiedenen, zweiten Stelle jedes Fahrmotors, so können ausschließlich die Messwerte der ersten Temperaturfühler miteinander verglichen werden und analog die Messwerte der zweiten Temperaturfühler. Dies ist jedoch nicht zwingend erforderlich. Gleichermaßen können alle Messwerte zur vorgegebenen Messgröße, und wie oben bereits ausgeführt, auch weitere Messwerte zur selben und/oder anderen Messgrößen miteinander verglichen werden, um auf einen fehlerhaften Zustand einer Fahrzeugkomponente zu schließen, beispielsweise indem Messwerte zu weiteren Messgrößen mit den Messwerten zur vorgegebenen Messgröße verglichen werden, um daraus das vorgegebene erste Maß abzuleiten.

Wie bereits ausgeführt, werden nicht nur die Messwerte zu den identischen Fahrzeugkomponenten, welche miteinander verglichen werden, zeitgleich erfasst, sondern auch die Messwerte zu der oder den weiteren Messgrößen und/oder die Messwerte zur selben Messgröße, welche unabhängig von den identischen Fahrzeugkomponenten erfasst werden. Dies schließt nicht aus, dass Ausreißer einer Messreihe aus einander folgenden Messwerten herausgefiltert oder die Messreihe geglättet wird.

Mit dem erfindungsgemäßen Verfahren lassen sich ganze Fahrzeugflotten fernüberwachen. Beispielsweise indem eine Flotte von Schienenfahrzeugen zumindest eine Gruppe identisch ausgestalteter Fahrzeugkomponenten umfasst, wobei Messwerte zu zumindest einer vorgegebenen Messgröße für jede der identisch ausgestalteten Fahrzeugkomponenten erfasst werden, wobei die Messwerte von den Schienenfahrzeugen zum streckenseitig angeordneten Kontrollzentrum übertragen werden, wobei im Kontrollzentrum die Messwerte von den identisch ausgestalteten Fahrzeugkomponenten verglichen werden und wobei auf einen fehlerhaften Zustand einer der identisch ausgestalteten Fahrzeugkomponenten geschlossen wird, wenn ein Messwert einer Fahrzeugkomponente mindestens um ein vorgegebenes Maß von den anderen Messwerten der Anderen der identisch ausgestalteten Fahrzeugkomponenten abweicht. Analog kann auch bei mehreren Schienenfahrzeugen mit identisch ausgestalteten Fahrzeugkomponenten ein Signal ausgegeben werden, wenn auf einen fehlerhaften Zustand einer der identisch ausgestalteten Fahrzeugkomponenten geschlossen wird. Dies kann dann genau auf dem Schienenfahrzeug ausgegeben werden, welches die Fahrzeugkomponente umfasst, auf deren fehlerhaften Zustand geschlossen wurde. Neben den über alle Schienenfahrzeuge identisch ausgestalteten Fahrzeugkomponenten sind insbesondere auch die Schienenfahrzeuge einer Fahrzeugflotte als solche baugleich.

Durch das zentrale Auswerten der Messwerte von mehreren Schienenfahrzeugen lässt sich sehr einfach eine Wartungsreihenfolge der Schienenfahrzeuge festlegen.

Ein Schienenfahrzeug, insbesondere des Personenverkehrs, zur Ausführung des erfindungsgemäßen Verfahrens umfasst somit zumindest eine Messeinrichtung zur Erfassung von Messwerten zumindest einer Messgröße und zumindest einen Sender zur Übertragung der Messwerte vom Schienenfahrzeug zum Kontrollzentrum. Messaufnehmer gilt als äquivalente Bezeichnung für Messeinrichtung.

Ein Kontrollzentrum zur Ausführung des erfindungsgemäßen Verfahrens umfasst dagegen zumindest einen Empfänger zur Übertragung der Messwerte vom Schienenfahrzeug zum Kontrollzentrum und zumindest einen Controller zum Auswerten der Messwerte mittels eines vorgegebenen Algorithmus. Der Controller ist weitergebildet zur Auswertung der Messwerte mittels voneinander verschiednen Algorithmen geeignet. Die Algorithmen liegen beispielsweise als Software vor. Sie sind leicht ersetzbar und/oder veränderbar. Der Controller ist fürderhin geeignet, die weiteren Messwerte zu verarbeiten, welche mittels der weiteren Messeinrichtungen erfasst werden, welche unabhängig vom Schienenfahrzeug sind.

Aus zumindest einem Schienenfahrzeug der genannten Art und zumindest einem Kontrollzentrum der genannten Art wird ein System oder eine Vorrichtung zur Ausführung des erfindungsgemäßen Verfahrens gebildet. Es kann weiterhin zumindest einen Speicher umfassen, auf welchem die Algorithmen abgespeichert sind, und auf welchen der Controller zugreifen kann. Des Weiteren kann es zumindest ein Mittel, beispielsweise ein Eingabegerät, aufweisen, insbesondere eine sogenannte Mensch-Maschine-Schnittstelle, zur Veränderung des vorgegebenen Algorithmus. Der Controller ist dann geeignet zur Auswertung der Messwerte mittels voneinander verschiednen Algorithmen. Zusätzlich oder alternativ ist der Controller in vorteilhafter Weise geeignet und entsprechend ausgestaltet zur Auswertung der Messwerte des Schienenfahrzeugs und der weiteren Messwerten, welche unabhängig vom Schienenfahrzeug erfasst werden.

Weist, wie in einem obigen Beispiel, zumindest ein Schienenfahrzeug zumindest eine Gruppe identisch ausgestalteter Fahrzeugkomponenten auf, beispielsweise zwei oder mehrere Fahrmotoren, wobei das Schienenfahrzeug jeweils zumindest eine Messeinrichtung zum Erfassen von Messwerten zu zumindest einer vorgegebenen Messgröße für jede der identisch ausgestalteten Fahrzeugkomponenten umfasst, beispielsweise weist jeder Fahrmotor zumindest einen Temperaturaufnehmer zur Aufnahme von Messwerten zur Messgröße Temperatur des Fahrmotors auf, weist das Kontrollzentrum zumindest einen zum Vergleichen der Messwerte geeigneten Controller auf. Dasselbe gilt natürlich auch für ein System mit mehreren Schienenfahrzeuge mit identisch ausgestalteten Fahrzeugkomponenten.

Die Erfindung lässt zahlreiche Ausführungsformen zu. Sie wird anhand der nachfolgenden Figuren näher erläutert, in welchen jeweils ein Ausgestaltungsbeispiel dargestellt ist. Gleiche Elemente in den Figuren sind mit gleichen Bezugszeichen versehen.
- Fig. 1: zeigt schematisch einen Ablaufplan für ein erfindungsgemäßes Verfahren,
- Fig. 2: zeigt schematisch ein System aus einem Schienenfahrzeug und einem Kotrollzentrum zur Ausführung des erfindungsgemäßen Verfahrens,
- Fig. 3: zeigt eine Trendanalyse.

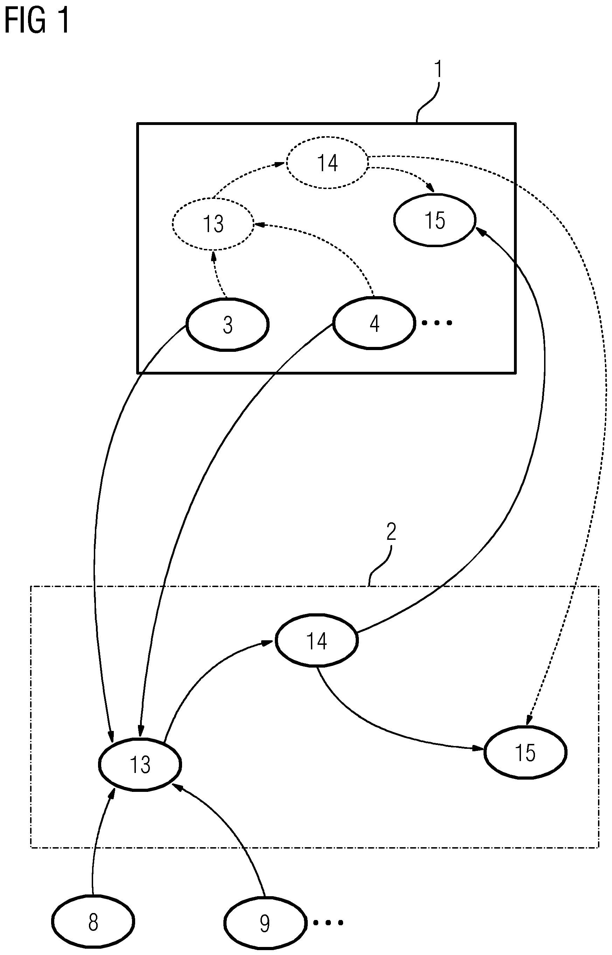

In Fig. 1 ist ein Ablaufplan für ein erfindungsgemäßes Verfahren skizziert. Ein Schienenfahrzeug 1 umfasst im Allgemeinen mehrere Messeinrichtungen, hier zwei Messeinrichtungen 3 und 4, zur Erfassung von Messwerten, insbesondere von Zuständen von Fahrzeugkomponenten des Schienenfahrzeugs 1. Zusätzlich weist das Schienenfahrzeug 1 einen hier nicht abgebildeten Sender zur Übertragung der Messwerte auf. Ein Kontrollzentrum 2 umfasst hierbei einen Controller zum Auswerten der Messwerte mittels eines vorgegebenen Algorithmus. Das Auswerten mittels des vorgegebenen Algorithmus ist durch das Element 13 des Ablaufplans gekennzeichnet. Ein Ergebnis 14 der Auswertung wird in diesem Ausführungsbeispiel über einen Bildschirm visualisiert. Die Ausgabe des Ergebnisses ist durch das Element 15 repräsentiert. Das Verfahren ist geeignet zur Fernüberwachung von zumindest einem Schienenfahrzeug, wie auch von mehreren Schienenfahrzeugen, beispielsweise einer Schienenfahrzeugflotte.

Mit durchgezogenen Strichen gezeichnet ist das erfindungsgemäße Verfahren, gepunktet ein Verfahren des Stands der Technik. Zunächst werden von den Messeinrichtungen 3 und 4 des Schienenfahrzeugs 1 Messwerte zu mindestens einer Messgröße erfasst. Üblich war es, diese Messwerte an Bord des Schienenfahrzeugs 1 in Verfahrensschritt 13 mittels eines vorgegeben, festen Algorithmus auszuwerten. Das Ergebnis 14 der Auswertung wurde in Verfahrensschritt 15 an Bord ausgegeben. Zusätzlich konnte das Ergebnis auch an ein Kontrollzentrum 2 übertragen und dort visualisiert werden. Das Schienenfahrzeug 1 wies dann entsprechende Einrichtungen, wie einen geeigneten Controller, auf. Nachteilig ist der schlecht oder nicht veränderbare Algorithmus. Erfindungsgemäß werden die Messwerte der Messeinrichtungen 3 und 4 jedoch nicht an Bord des Schienenfahrzeugs ausgewertet, sondern, insbesondere zumindest streckenweise drahtlos, an das Kontrollzentrum 2 übertragen. Die Übertragung erfolgt hier zyklisch, beispielsweise kontinuierlich bei einer analogen Übertragung oder diskret bei einer bevorzugten digitalen Übertragung. Anschließend werden die Messwerte streckenseitig ausgewertet. Der Algorithmus zur Auswertung ist leicht an sich verändernde Anforderungen anpassbar oder austauschbar. Das Ergebnis 14 der Auswertung 13 kann sowohl zurück zum Schienenfahrzeug 1 geführt werden, um es dort auszugeben, als auch direkt im Kontrollzentrum 2 ausgegeben werden. Die Ausgabe des Ergebnisses kann in Abhängigkeit des Ergebnisses und somit eventgesteuert erfolgen. Eine Bereitstellung zur Ausgabe erfolgt hier hingegen zyklisch.

In die Auswertung fließen in diesem Ausführungsbeispiel weitere Messwerte mit ein, welche von externen, vom Schienenfahrzeug unabhängigen Messeinrichtungen erfasst werden.

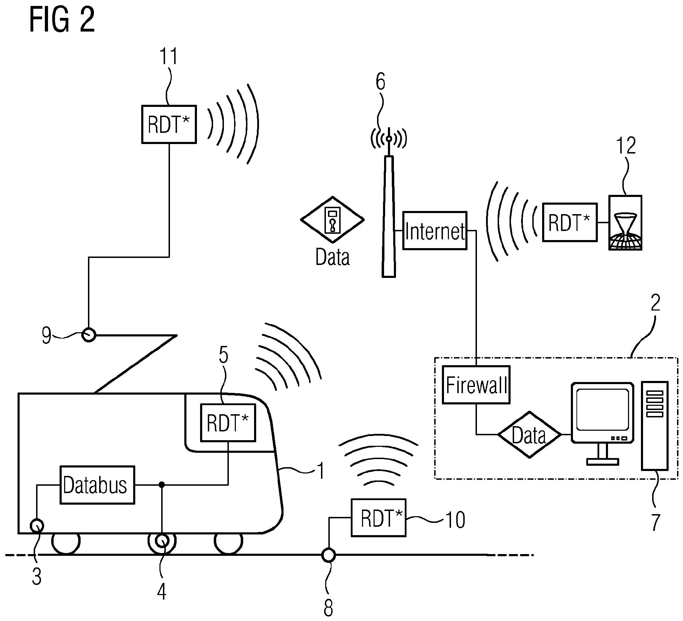

In der Fig. 2 ist ein System aus einem Schienenfahrzeug 1 und einem Kontrollzentrum 2 schematisch dargestellt. Das Schienenfahrzeug 1 weist verschiedene oder identisch ausgestaltete Fahrzeugkomponenten auf und jeweils zumindest eine Messeinrichtung 3, 4 zum Erfassen von Messwerten zu zumindest einer vorgegebenen Messgröße für jede Fahrzeugkomponente. Beispielsweise ein Temperaturfühler zur Erfassung einer Temperatur eines Fahrmotors und einem Tachometer zur Erfassung der aktuellen Geschwindigkeit des Schienenfahrzeugs 1. Darüber hinaus umfasst das Schienenfahrzeug 1 einen Sender 5 zum Senden der Messwerte an das Kontrollzentrum 2. Die Messwerte werden von den Messeinrichtungen 3, 4 über einen Daten-Bus im Schienenfahrzeug 1 an den Sender 5 übermittelt.

Das Kontrollzentrum 2 umfasst wiederum einen Empfänger 6 zum Empfangen der Messwerte vom Schienenfahrzeug 1. Sender 5 und Empfänger 6 sind selbstverständlich zueinander kompatibel. Hier ist der Empfänger 6 als Basisstation eines Mobilfunknetzes dargestellt, welcher beabstandet vom Kontrollzentrum 2 angeordnet ist. Das ortsfeste Kontrollzentrum 2 weist somit eine Vielzahl von möglichen Empfängern auf. Die vom Schienenfahrzeug 1 zum Empfänger 6 übermittelten Messwerte werden in diesem Ausgestaltungsbeispiel über das Internet vom Empfänger 6 zum zumindest einen Controller 7 des Kontrollzentrums zum Vergleichen der Messwerte übermittelt.

Neben den Messwerten zu den Fahrzeugkomponenten, erfasst durch die Messeinrichtungen 3, 4, werden weitere Messwerte vom Controller 7 zur Auswertung der Messwerte der Fahrzeugkomponenten berücksichtigt, beispielsweise mit ihnen korreliert.

Die weiteren Messwerte werden hier von der Infrastruktur des Schienenfahrzeugs 1, insbesondere von der Strecke und der Oberleitung, durch weitere Messeinrichtungen 8, 9 erfasst, und mittels weiteren Sendern 10, 11 an das Kontrollzentrum 2 übermittelt. Sämtliche Messwerte werden insbesondere verschlüsselt übermittelt. Jedoch auch weitere, gegebenenfalls unverschlüsselte Messwerte, beispielsweise zum Wetter, können in die beispielhaft angeführte Korrelation mit einfließen und dadurch Berücksichtigung finden. Hier skizziert das Bezugszeichen 12 zusätzliche Messwertquellen, wie z.B. ein Wetterdienst. RDT* steht im Übrigen für Remote Data Transfer.

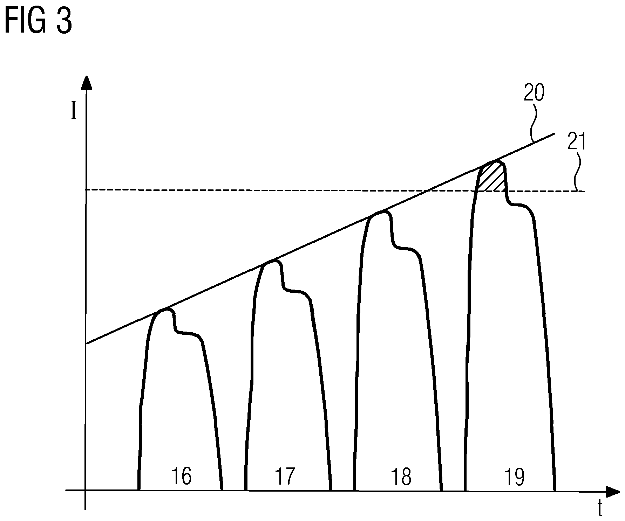

Fig. 3 veranschaulicht mittels eines Graphen eine einfache Trendanalyse als Beispiel für einen Algorithmus zur Auswertung von Messwerten. Aufgetragen ist ein zeitlicher Verlauf eines Motorstroms eines Motors zum Öffnen und Schließen einer Tür zum Fahrgastraum des Schienenfahrzeugs über aufeinander nachfolgende Türöffnungszyklen. Die Messwerte zu drei Türöffnungszyklen 16, 17 und 18 werden im Kontrollzentrum ausgewertet. Es lässt sich ein Motorstromverlauf 19 für den nächsten Türöffnungszyklus prognostizieren. Zusätzlich oder alternativ kann ein Trend, dargestellt durch die Gerade 20, errechnet werden. Ist ein Schwellwert 21 vorgegeben, dessen Überschreiten durch den Motorstrom auf einen fehlerhaften Zustand der Tür schließen lässt, so ist das Ergebnis der Trendanalyse, dass der Motorstrom voraussichtlich beim nächsten Türöffnungszyklus den Schwellwert übersteigt. Dies kann als Ergebnis der Auswertung ausgegeben werden. Die Auswertung könnte jedoch weitergehend die Stilllegung der Tür anraten, um Schaden abzuwenden, und/oder die Wartung der Tür in einen Wartungsplan des Schienenfahrzeugs eintragen. Die Ausgabe des Ergebnisses der Auswertung kann auch darin bestehen, dass die Tür ohne Zutun des Personals des Schienenfahrzeugs und/oder des Kotrollzentrum automatisch außer Betrieb genommen wird.

## Patentansprüche

1. Diagnoseverfahren für Schienenfahrzeuge, welche jeweils zumindest eine Messeinrichtung zur Erfassung von Messwerten zumindest einer Messgröße umfassen, mit folgenden Verfahrensschritten:
- Erfassen von Messwerten mittels der zumindest einen Messeinrichtung von zumindest einem Schienenfahrzeug,
- Übertragen der Messwerte vom Schienenfahrzeug zu einem streckenseitig angeordneten Kontrollzentrum,
- Auswerten der Messwerte im Kontrollzentrum mittels eines vorgegebenen Algorithmus, und
- Bereitstellen zumindest eines Ergebnisses der Auswertung zur Ausgabe,
**dadurch gekennzeichnet, dass**
die Auswertung der Messwerte vom Schienenfahrzeug im Kontrollzentrum mittels des vorgegebenen Algorithmus in unmittelbarer Abhängigkeit von weiteren Messwerten erfolgt, welche unabhängig vom Schienenfahrzeug mittels Messeinrichtungen erfasst werden, die unabhängig vom Schienenfahrzeug sind.

2. Verfahren nach Anspruch 1, **dadurch gekennzeichnet, dass** das Ergebnis der Auswertung auf das Schienenfahrzeug übertragen wird und, dass das Ergebnis der Auswertung auf dem Schienenfahrzeug ausgegeben wird.

3. Verfahren nach einem der Ansprüche 1 oder 2, **dadurch gekennzeichnet, dass** das Ergebnis der Auswertung streckenseitig ausgegeben wird.

4. Verfahren nach einem der Ansprüche 1 bis 3, **dadurch gekennzeichnet, dass** die Messwerte zyklisch vom Schienenfahrzeug zum Kontrollzentrum übertragen werden.

5. Verfahren nach einem der Ansprüche 1 bis 4, **dadurch gekennzeichnet, dass** der vorgegebene Algorithmus geeignet ist zu einer Trendanalyse der Messwerte.

6. Verfahren nach einem der Ansprüche 1 bis 5, **dadurch gekennzeichnet, dass** die Messwerte vom Schienenfahrzeug zum streckenseitig angeordneten Kontrollzentrum drahtlos übertragen werden.

7. Verfahren nach einem der Ansprüche 1 bis 6, **dadurch gekennzeichnet, dass** die Messgröße, zu welchen erste und/oder zweite Messwerte erfasst werden, ausgewählt sind aus einer Gruppe von folgenden Messgrößen: Geschwindigkeit des Schienenfahrzeugs, Beschleunigung des Schienenfahrzeugs, Drehzahl eines Antriebsmotors, elektrischer Motorstrom, elektrische Spannung eines Motors, thermodynamische Temperatur eines Getriebes.

8. System aus zumindest einem Schienenfahrzeug und zumindest einem Kontrollzentrum, welches Schienenfahrzeug zumindest eine Messeinrichtung zur Erfassung von Messwerten zumindest einer Messgröße und zumindest einen Sender zur Übertragung der Messwerte vom Schienenfahrzeug zum Kontrollzentrum umfasst, und welches Kontrollzentrum zumindest einen Empfänger zur Übertragung der Messwerte vom Schienenfahrzeug zum Kontrollzentrum und zumindest einen Controller zum Auswerten der Messwerte mittels eines vorgegebenen Algorithmus umfasst, **dadurch gekennzeichnet, dass** der Controller derart ausgestaltet ist, dass er die Auswertung der Messwerte des Schienenfahrzeugs mittels des vorgegebenen Algorithmus in unmittelbarer Abhängigkeit von weiteren Messwerten, welche unabhängig vom Schienenfahrzeug mittels Messeinrichtungen erfasst sind, ausführt.

9. System nach Anspruch 8, **dadurch gekennzeichnet, dass** der Controller geeignet ist zur Auswertung der Messwerte mittels mehrerer, voneinander verschiedener vorgegebenen Algorithmen.

10. System nach einem der Ansprüche 8 oder 9, **dadurch gekennzeichnet, dass** es mehrere Schienenfahrzeuge mit Messeinrichtungen zum Erfassen von Messwerten identischer Messgrößen umfasst, und der Controller geeignet ist zur Auswertung der Messwerte mittels des vorgegebenen Algorithmus im Kontrollzentrum.

## Claims

1. Diagnosis method for rail vehicles that each comprise at least one measuring device for capturing measured values for at least one measured variable, comprising the following method steps:
- measured values are captured by means of the at least one measuring device of at least one rail vehicle,
- the measured values are transmitted from the rail vehicle to a control centre arranged on the line,
- the measured values are evaluated in the control centre by means of a prescribed algorithm, and
- at least one result of the evaluation is provided for output,
**characterized in that**
the evaluation of the measured values from the rail vehicle in the control centre by means of the prescribed algorithm is effected on the direct basis of further measured values that are captured independently of the rail vehicle by means of measuring devices that are independent of the rail vehicle.

2. Method according to Claim 1, **characterized in that** the result of the evaluation is transmitted to the rail vehicle and **in that** the result of the evaluation is output on the rail vehicle.

3. Method according to either of Claims 1 and 2, **characterized in that** the result of the evaluation is output on the line.

4. Method according to one of Claims 1 to 3, **characterized in that** the measured values are transmitted from the rail vehicle to the control centre cyclically.

5. Method according to one of Claims 1 to 4, **characterized in that** the prescribed algorithm is suitable for trend analysis of the measured values.

6. Method according to one of Claims 1 to 5, **characterized in that** the measured values are transmitted from the rail vehicle to the control centre arranged on the line wirelessly.

7. Method according to one of Claims 1 to 6, **characterized in that** the measured variables for which first and/or second measured values are captured are selected from a group comprising the following measured variables: speed of the rail vehicle, acceleration of the rail vehicle, speed of a drive motor, electric motor current, electric voltage of a motor, thermodynamic temperature of a drive.

8. System comprising at least one rail vehicle and at least one control centre, which rail vehicle comprises at least one measuring device for capturing measured values for at least one measured variable and at least one transmitter for transmitting the measured values from the rail vehicle to the control centre, and which control centre comprises at least one receiver for transmitting the measured values from the rail vehicle to the control centre and at least one controller for evaluating the measured values by means of a prescribed algorithm,
**characterized in that**
the controller is configured such that it performs the evaluation of the measured values of the rail vehicle by means of the prescribed algorithm on the direct basis of further measured values that are captured independently of the rail vehicle by means of measuring devices.

9. System according to Claim 8, **characterized in that** the controller is suitable for evaluating the measured values by means of a plurality of different prescribed algorithms.

10. System according to either of Claims 8 and 9, **characterized in that** it comprises a plurality of rail vehicles having measuring devices for capturing measured values for identical measured variables, and the controller is suitable for evaluating the measured values by means of the prescribed algorithm in the control centre.

## Revendications

1. Procédé de diagnostic pour des véhicules ferroviaires, qui comprennent chacun au moins un dispositif de mesure pour détecter des valeurs de mesure d'au moins une grandeur de mesure, ayant les stades de procédé suivants :
- détection des valeurs de mesure au moyen du au moins un dispositif de mesure du au moins un véhicule ferroviaire,
- transmission des valeurs de mesure du véhicule ferroviaire à un centre de contrôle disposé du côté de la voie,
- exploitation des valeurs de mesure dans le centre de contrôle au moyen d'un algorithme donné à l'avance, et
- mise à disposition d'au moins un résultat de l'exploitation pour émission,
**caractérisé en ce que**
l'exploitation des valeurs de mesure du véhicule ferroviaire dans le centre de contrôle s'effectue au moyen de l'algorithme donné à l'avance en fonction directe d'autres valeurs de mesure, qui sont détectées, indépendamment du véhicule ferroviaire, au moyen de dispositifs de mesure indépendants du véhicule ferroviaire.

2. Procédé suivant la revendication 1, **caractérisé en ce que** l'on transmet le résultat de l'exploitation au véhicule ferroviaire, et **en ce que** l'on sort le résultat de l'exploitation sur le véhicule ferroviaire.

3. Procédé suivant l'une des revendications 1 ou 2, **caractérisé en ce que** l'on sort le résultat de l'exploitation du côté de la voie.

4. Procédé suivant l'une des revendications 1 à 3, **caractérisé en ce que** l'on transmet les valeurs de mesure cycliquement du véhicule ferroviaire au centre de contrôle.

5. Procédé suivant l'une des revendications 1 à 4, **caractérisé en ce que** l'algorithme donné à l'avance est approprié à une analyse de tendance des valeurs de mesure.

6. Procédé suivant l'une des revendications 1 à 5, **caractérisé en ce que** l'on transmet sans fil les valeurs de mesure du véhicule ferroviaire au centre de contrôle disposé du côté de la voie.

7. Procédé suivant l'une des revendications 1 à 6, **caractérisé en ce que** l'on choisit les grandeurs de mesure parmi lesquelles on détecte des première et/ou deuxième valeurs de mesure dans le groupe de grandeur de mesure suivante : vitesse du véhicule ferroviaire, accélération du véhicule ferroviaire, régime d'un moteur d'entraînement, courant électrique d'un moteur, tension électrique d'un moteur, température thermodynamique d'une transmission.

8. Système composé d'au moins un véhicule ferroviaire et d'au moins un centre de contrôle, lequel véhicule ferroviaire comprend au moins un dispositif de mesure pour détecter des valeurs de mesure d'au moins une grandeur de mesure et au moins un émetteur pour transmettre les valeurs de mesure du véhicule ferroviaire au centre de contrôle, et lequel centre de contrôle comprend au moins un récepteur de transmission des valeurs de mesure du véhicule ferroviaire au centre de contrôle et au moins une unité de commande pour exploiter les valeurs de mesure au moyen d'un algorithme donné à l'avance, **caractérisé en ce que** l'unité de commande est conformée de manière à effectuer l'exploitation des valeurs de mesure du véhicule ferroviaire au moyen de l'algorithme donné à l'avance en fonction directe d'autres valeurs de mesure, qui sont détectées au moyen de dispositifs de mesure, indépendamment du véhicule ferroviaire.

9. Système suivant la revendication 8, **caractérisé en ce que** l'unité de commande est appropriée à l'exploitation des valeurs de mesure au moyen de plusieurs algorithmes donnés à l'avance, différents les uns des autres.

10. Système suivant l'une des revendications 8 ou 9, **caractérisé en ce qu'**il comprend plusieurs véhicules ferroviaires ayant des dispositifs de mesure pour détecter des valeurs de mesure de mêmes grandeurs de mesure, et l'unité de commande est appropriée pour exploiter les valeurs de mesure au moyen de l'algorithme donné à l'avance du centre de contrôle.
